# NOUVEAU FASCICULE DE BREVET EUROPEEN

(11) **EP 1 778 818 B2**
(45) Date de publication et mention de la décision concernant l'opposition: **12.08.2020**
(45) Mention de la délivrance du brevet: 09.01.2013
(21) Numéro de dépôt: 05793574.4
(22) Date de dépôt: 22.07.2005
(51) Int. Cl.: C09K 21/14, C08L 75/04, C09K 21/02

(54) **MATERIAU COUPE-FEU**
BRANDSCHUTZMATERIAL
FIRESTOP MATERIAL

(30) Priorité: 22.07.2004 FR 0451611
(43) Date de publication de la demande: 02.05.2007
(73) Titulaire: Compart SAS, 30100 Alès (FR)
(72) Inventeur: LAOUTID, Fouad, F-30100 Alès Cédex (FR); SAUTTREAU, Jean, F-30520 St Martin De Valgalgues (FR); BERGOGNE, Laurent, F-30000 Nîmes (FR)
(86) Numéro de dépôt international: PCT/FR2005/001907
(87) Numéro de publication internationale: WO 2006/018523

(56) Documents cités:
- WO-A-2005/003254
- DE-A1- 3 940 907
- DE-A1- 19 702 760
- DE-U1- 20 303 672
- US-A- 5 173 515
- US-A1- 2002 020 827

## Description

L'invention a trait à un matériau coupe-feu constitué par une mousse de polymère, notamment une mousse de polyuréthane, ne contenant aucun composé halogéné et contenant des moyens retardateurs de flamme. Cette invention concerne, encore, une composition chimique destinée, après expansion et séchage, à former un tel matériau coupe-feu ainsi qu'une utilisation de ce dernier.

Cette invention concerne le domaine des matériaux conçus aptes à présenter des propriétés de tenue au feu, plus particulièrement, des propriétés, d'une part, de résistance au feu et, d'autre part, de réaction au feu (aptitude d'un tel produit à participer à un incendie).

L'on connaît, d'ores et déjà, des produits de ce type et qui se présentent sous la forme d'une mousse dite « coupe-feu », plus particulièrement élaborée à base d'une mousse polyuréthane.

A ce propos, il convient d'observer qu'une mousse polyuréthane vierge présente, cependant, l'inconvénient de dégager des gouttes enflammées en cas d'incendie.

Afin de remédier à cet inconvénient, il est connu d'ajouter à une telle mousse polyuréthane des agents retardateurs de flamme, usuellement élaborés à base de composés halogénés. A ce propos, on observera qu'il est particulièrement difficile d'élaborer une mousse, contenant de tels composés halogénés, et qui présente une réaction au feu ainsi qu'une résistance au feu satisfaisantes.

De plus, l'emploi de tels composés halogénés pose des problèmes de pollution de l'environnement et se traduit, lors de la combustion de la mousse, par des rejets non contrôlés dans l'atmosphère, plus particulièrement, par un dégagement de grandes quantités de fumées denses et toxiques. On remarquera, en outre, qu'en cas d'emploi d'un composé halogéné à base de chlore, les fumées d'un tel agent retardateur se combinent avec l'eau projetée par les pompiers pour former de l'acide chlorhydrique, particulièrement corrosif et susceptible de mettre en péril ces pompiers.

L'on connaît, encore, des mousses de polyuréthane qui, de manière à présenter un bon comportement au feu, sont réalisées 5 à partir de polyols halogénés ou phosphorés. Ces polyols présentent un certain nombre d'inconvénients liés, notamment, à des rejets polluants du type susmentionnés, à un coût de revient particulièrement élevé ainsi qu'à une viscosité élevée rendant particulièrement complexe la mise en œuvre d'un tel polyol.

La demande WO2005/003254 A1, déposée avant la présente demande et publiée après celle-ci décrit la combinaison particulière d'une mousse polymère à base de polyol saccharose avec des moyens retardateurs de flamme comprenant un mélange de graphite expansible, de polyphosphate d'ammonium, d'hydroxyde d'aluminium et un support liant pouvant être minéral.

Le document US 5 173 515 concerne des mousses retardant le feu, organiques ou non (par exemple une mousse de polyuréthane), contenant, d'une part du graphite expansible, et d'autre part, au moins un sel d'amine ainsi qu'au moins un polyol phosphoré.

Le document DE 203 03 672 concerne une mousse rigide de polyuréthane résistante aux flammes et dépourvue d'halogènes qui contient une combinaison de poudre d'extinction de type ABC que l'on retrouve notamment dans les extincteurs et d'autre part un graphite expansible.

Le document DE 39 40 907 décrit un matériau coupe-feu constitué par un matériau polymère organique inflammable adoptant la forme d'une mousse et auquel est mélangé, d'une part, un graphite expansible destiné à rendre ce matériau résistant au feu et d'autre part une substance neutralisante insoluble dans l'eau qui est destinée à neutraliser l'acidité du graphique et qui conditionne ainsi la valeur du pH du matériau.

Le document US 2002/0020827 décrit un système de mousse à deux composants ainsi que son utilisation pour obturer des ouvertures pour une utilisation dans le cadre de la protection contre l'incendie et contenant un composant polyisocyanate (B) et un composant polyol (A) contenant au moins un polyol, un catalyseur, du graphite expansible, au moins un matériau intumescent, de l'eau ou un agent de gonflage, au moins un agent formant un acide et au moins un stabilisateur de croûte de cendre.

Le document DE 197 02 760 concerne une mousse de polyuréthane résistante au feu et contenant, d'une part, un matériau qui mousse en cas d'incendie et d'autre part, un matériau qui rend plus difficile l'inflammabilité de la mousse.

La présente invention se veut à même de remédier aux inconvénients des matériaux coupe-feu de l'état de la technique.

A cet effet, l'invention concerne un matériau coupe-feu constitué par une mousse de polymère ne contenant aucun composé halogéné et contenant des moyens retardateurs de flamme, caractérisé par le fait que les moyens retardateurs de flamme sont constitués par des moyens conçus pour former une couche charbonnée cohésive au niveau de la surface de la mousse, ceci pour une température correspondant à celle d'un incendie, ces moyens pour former une couche charbonnée étant, d'une part, constitués par au moins un agent de charbonnement physique destiné à former, par lui-même et en l'absence de toute interaction avec un quelconque autre constituant du matériau coupe-feu, une telle couche charbonnée, d'autre part, constitués par au moins un agent de charbonnement réactif destiné à former, en réagissant avec le polymère de la mousse, une couche charbonnée à la surface du matériau et, d'autre part encore, complétés par au moins un retardateur de flamme de type inorganique.

Le retardateur de flamme inorganique est constitué par une charge minérale choisie parmi un mélange de poudre de verre, un silicate de calcium, du talc et un composé à décomposition endothermique de type oxyde métallique, plus particulièrement un borate de zinc, un oxyde d'aluminium, un oxyde de magnésium.

La mousse de polymère est constituée par une mousse de polyuréthane réalisée à partir, d'une part, d'au moins un polyol (plus particulièrement un polyol polyéther ou un polyol polyester) et, d'autre part, d'au moins un isocyanate.

L'invention a, encore, trait à une composition chimique destinée, après expansion et séchage, à former un matériau coupe-feu tel que susmentionné et contenant les précurseurs de la mousse de polymère ainsi que les moyens retardateurs de flamme.

Cette invention concerne l'utilisation d'un tel matériau coupe-feu pour le calfeutrement d'une ouverture pour la réception de conduits, gaines, câbles ou analogues.

Finalement, l'invention concerne, encore, l'utilisation d'un tel matériau coupe-feu comme matériau de construction ou comme revêtement d'une surface.

Les avantages de la présente invention consistent en ce que le matériau coupe-feu est conçu en sorte que, lorsqu'il est soumis à une élévation de température due à un incendie, il se forme une couche charbonnée protectrice au niveau de sa surface. Une telle couche charbonnée présente une bonne résistance mécanique et s'accompagne de la formation d'une croûte céramisée qui protège le matériau.

Un autre avantage consiste en ce que le matériau coupe-feu est constitué par une mousse de polymère ne contenant aucun composé halogéné ce qui permet d'éviter, lors de la combustion du matériau, les rejets préjudiciables à l'homme et à son environnement, plus particulièrement les rejets polluants, nocifs, toxiques, corrosifs ou préjudiciables à la couche d'ozone.

Encore un autre avantage consiste en ce qu'il est possible, en choisissant de manière judicieuse les composants de la mousse de polymère, de réaliser un matériau coupe-feu sous la forme d'une mousse plus ou moins flexible, voire rigide, parfaitement adaptée à l'utilisation qui en sera faite.

Selon un autre avantage, le matériau coupe-feu est conçu apte à prendre la place de l'enveloppe de protection du ou des conducteurs en cuivre d'un câble électrique et/ou la place d'une gaine à l'intérieur de laquelle est disposé un tel câble, ceci en cas de fonte d'une telle enveloppe, d'un tel câble ou d'une telle gaine sous l'effet de la chaleur d'un incendie.

D'autres buts et avantages de la présente invention apparaîtront au cours de la description qui va suivre se rapportant à des modes de réalisation qui ne sont donnés qu'à titre d'exemples indicatifs et non limitatifs.

La présente invention concerne le domaine des matériaux conçus aptes à présenter des propriétés de tenue (résistance et réaction) au feu.

Ainsi, l'invention est relative à un matériau coupe-feu constitué par une mousse de polyuréthane, ledit polyol étant un polyol polyéther ou un polyol polyester.

Selon une première caractéristique de l'invention, cette mousse de polyuréthane ne contient aucun composé halogéné.

On observera que cette mousse de polyuréthane est de type expansible, de préférence expansible à l'eau. Ceci permet avantageusement, de réaliser l'expansion d'une telle mousse sans faire appel à un quelconque gaz propulseur.

Cette mousse polyuréthane est une mousse bi-composants réalisée à partir, d'une part, d'au moins un polyol et d'autre part, d'au moins un isocyanate.

Selon une première caractéristique, un tel polyol présente une viscosité, à 25°C, comprise entre 200 et 1000 mPa.s, de préférence comprise entre 400 et 650 mPa.s.

Une telle viscosité permet, comme il sera exposé plus avant, d'incorporer les moyens retardateurs de flamme avec un taux de charge important.

Selon une autre caractéristique, un tel polyol présente un indice d'OH compris entre 200 et 500.

Une autre caractéristique consiste en ce que le polyol est choisi en sorte que la mousse de polymère soit plus ou moins flexible, voire rigide, ceci en fonction de l'application envisagée d'une telle mousse. Un tel choix permet, également, de réaliser une mousse de polymère à mémoire de forme et/ou visco-élastique.

A ce propos, on observera que, selon un mode de réalisation préféré de l'invention, un tel polyol est constitué par un polyol polyéther.

En fait et de manière connue en soi, les polyols polyéthers sont des produits de polyaddition. Dans le cadre de la présente invention, de bons résultats (viscosité, flexibilité) sont obtenus en faisant appel à un polyol polyéther réalisé à base de molécules d'éthylène glycol, de glycérine, d'amine, de triméthylpropane, de pentaérytritol, de sucrose, de sorbitol, de saccharose ou analogue.

En fait, de telles molécules de base sont fixées sur des molécules d'oxyde de propylène et/ou d'oxyde d'éthylène pour la réalisation d'un tel polyol polyéther.

A ce propos, on observera qu'au travers du choix approprié d'une telle molécule de base et de la molécule d'oxyde (propylène et/ou éthylène) sur laquelle cette molécule de base sera fixée, il est, avantageusement, possible de réaliser des mousses plus ou moins flexibles, voire rigides.

Il a été consigné dans le tableau ci-dessous quelques exemples de compositions de polyols polyéthers conférant différentes textures (flexibilité, rigidité) à de telles mousses.

| Applications | Mousses flexibles | | | Mousses rigides | |
|---|---|---|---|---|---|
| Composition des polyols | Glycérine + oxyde de propylène | Amine + oxyde de propylène | Triméthyl propane + oxyde d'éthylène | Triméthyl propane + oxyde de propylène | Sucrose + oxyde de propylène |

Un mode particulier de réalisation donnant de bons résultats consiste en une mousse de polyuréthane contenant, soit un polyol polyéther de 5 à 30% en poids avec un indice d'OH compris entre 200 et 500, soit un premier polyol polyéther et un second polyol polyéther, chacun de 5 à 30% en poids avec un indice d'OH compris entre 200 et 500.

Selon un autre mode de réalisation de l'invention, le polyol peut être constitué par un polyol polyester qui, de manière connue en soi, résulte de la polycondensation d'au moins un polyol sur au moins un polyacide.

A ce propos, on observera que, selon l'invention, un tel polyol polyester peut, alors, être réalisé à base d'au moins un polyacide, notamment un diacide, plus particulièrement de l'acide adipique, phtalique, maléique, succinique ou analogue.

Quant au polyol, celui-ci peut être un diol (éthylène glycol, propylène glycol), un triol (triméthylpropane, glycérine) ou autre (pentaérytritol, sorbitol).

Il convient d'observer que les polyols, employés pour la réalisation d'une mousse de polymère entrant dans la composition du matériau coupe-feu conforme à la présente invention, sont constitués par des polyols polyéthers ou des polyols polyesters. De tels polyols ne présentent, à la base, aucune caractéristique intrinsèque de tenue au feu, contrairement aux polyols halogénés ou phosphorés de l'état de la technique.

Pourtant et de manière particulièrement surprenante, ces polyols polyéthers ou ces polyols polyesters s'avèrent particulièrement appropriés pour la réalisation d'un matériau coupe-feu conforme à la présente invention.

Tel qu'évoqué ci-dessus, la mousse de polyuréthane est, encore, réalisée à partir d'au moins un isocyanate qui est, plus particulièrement, un diisocyanate.

Un mode préféré de réalisation consiste à faire appel au diphénylméthane diisocyanate (MDI), notamment au diphénylméthane diisocyanate 4, 4, à un ou plusieurs isomères de ce dernier ou homologue.

Un autre mode de réalisation consiste à faire appel au toluène diisocyanate, voire encore à un isocyanate aromatique (naphtyléne diisocyanate...) ou à un isocyanate aliphatique (hexaméthylène diisocyanate...).

De manière à assurer un rôle de coupe-feu, cette mousse de polymère contient des moyens retardateurs de flamme.

Selon l'invention, de tels moyens retardateurs de flamme sont constitués par des moyens conçus pour former une couche charbonnée cohésive au niveau de la surface de la mousse, ceci pour une température correspondant à celle d'un incendie.

A ce propos, on observera que les moyens pour former une couche charbonnée sont constitués par au moins un agent de charbonnement de type physique. En fait, un tel agent de charbonnement est dit physique lorsqu'il forme, par lui-même et en l'absence de toute interaction avec un quelconque autre constituant du matériau coupe-feu (en particulier en l'absence d'interaction avec le polymère de la mousse), une couche charbonnée en surface du matériau, ceci pour une température (plus particulièrement une haute température) correspondant à celle d'un incendie.

Un mode préféré de réalisation de l'invention consiste en ce que l'agent de charbonnement physique est constitué par au moins un composé chimique minéral adoptant une structure en feuillets et apte à s'exfolier avec la chaleur, plus particulièrement pour une température correspondant à celle d'un incendie.

Un tel composé minéral en feuillets est, de préférence, de type expansible à haute température (plus particulièrement à la température d'un incendie).

Ainsi et sous l'effet de la chaleur d'un incendie, un tel composé chimique minéral en feuillets s'exfolie, s'expanse et forme une couche charbonnée protectrice à la surface du matériau.

Par le biais de cette expansion, ce composé chimique minéral est susceptible de prendre la place d'une enveloppe de protection d'un ou plusieurs conducteurs de cuivre d'un câble électrique et/ou la place d'une gaine à l'intérieur de laquelle est disposé un tel câble, ceci en cas de dégradation de ladite mousse ou de fonte d'une telle enveloppe, d'un tel câble ou d'une telle gaine sous l'effet de la chaleur d'un incendie.

En fait, le composé chimique minéral en feuillets peut être constitué par de la vermiculite ou par du mica, plus particulièrement de type expansible.

Cependant et selon un mode de réalisation préféré de l'invention, un tel composé chimique minéral en feuillets est constitué par un composé à base de carbone, de préférence du graphite, plus particulièrement un graphite de type expansible, notamment d'épaisseur comprise entre 200 et 400 microns.

Il convient d'observer que l'ajout d'un tel composé chimique minéral en feuillets (plus particulièrement le graphite expansible) à la composition chimique destinée à former le matériau coupe-feu, augmente la viscosité de cette composition qui passe de l'état liquide à l'état pâteux.

Selon une caractéristique additionnelle de l'invention, les moyens pour former une couche charbonnée sont constitués par au moins un agent de charbonnement physique (tel que susmentionné, plus particulièrement du graphite, notamment expansible) complété par au moins un agent de charbonnement réactif.

En fait, un tel agent de charbonnement est dit réactif lorsqu'il forme une couche charbonnée à la surface du matériau en réagissant avec le polymère de la mousse (plus particulièrement avec les atomes d'oxygène du polymère), ceci pour une température correspondant à celle d'un incendie (plus particulièrement à haute température).

A ce propos, on observera que l'agent de charbonnement réactif est défini par au moins un composé organe-phosphoré.

Un tel composé organe-phosphoré peut être constitué par un composé phosphaté : le tri crésyl phosphate (TCP) ou encore, être constitué par un composé polyphosphaté : l' ammonium polyphosphate (APP).

Une autre caractéristique de l'invention consiste en ce que les moyens pour former une couche charbonnée (agent de charbonnement physique et agent de charbonnement réactif) sont complétés par au moins un retardateur de flamme de type inorganique.

A ce propos, on observera qu'un tel retardateur de flamme inorganique comprend une charge minérale; notamment un mélange de poudre de verre, un silicate de calcium, du talc ou analogue.

Une telle charge minérale est destinée à fondre à haute température pour former une croûte, notamment adoptant la forme d'une couche vitreuse.

Un tel retardateur de flamme inorganique comprend également un composé dont la décomposition est de type endothermique, ceci sous l'effet d'une température correspondant à celle d'un incendie.

Un tel composé à décomposition endothermique est constitué par un oxyde métallique, plus particulièrement un borate de zinc, un oxyde d'aluminium, un oxyde de magnésium ou analogue.

Selon l'invention, le matériau coupe-feu comporte un retardateur de flamme inorganique constitué par une telle charge minérale ainsi qu'un retardateur de flamme inorganique constitué par un tel composé à décomposition endothermique.

A ce propos, on observera que ce composé à décomposition endothermique se comporte, alors, comme un agent fondant qui stabilise la croûte susmentionnée en assurant la cohésion de cette nouvelle barrière.

Selon une autre caractéristique de l'invention, les moyens pour former une couche charbonnée (agent de charbonnement physique et agent de charbonnement réactif) et le retardateur de flamme de type inorganique se présentent sous la forme d'additifs qui sont incorporés avant, pendant ou après polymérisation de la mousse de polymère mais, de préférence, avant une telle polymérisation.

A ce propos, on observera que le choix d'un polyol tel que susmentionné, plus particulièrement d'un polyol de faible viscosité (notamment de 400 à 650mPa.s) autorise, avantageusement, une bonne incorporation de ces additifs, notamment avec un taux de charge important.

Selon une autre caractéristique de l'invention et de manière surprenante, les moyens pour former une couche charbonnée (agent de charbonnement physique et agent de charbonnement réactif) et le retardateur de flamme de type inorganique permettent d'obtenir une synergie dans le comportement du matériau vis-à-vis du feu et de la température.

En fait et selon une autre caractéristique de l'invention, l'agent de charbonnement physique, l'agent de charbonnement réactif et le retardateur de flamme de type inorganique sont choisis en sorte d'intervenir à différents stades de l'attaque par le feu ou par la température du matériau coupe-feu, notamment de manière successive avec l'augmentation de la température. Ces différentes interventions conduisent à la formation d'une couche charbonnée cohésive à la surface de la mousse assurant la protection de ce matériau.

A ce propos, on observera que, avec l'augmentation de la température, l'agent de charbonnement physique intervient tout d'abord en donnant naissance à une couche charbonnée sans véritable tenue mécanique. Cette tenue mécanique est conférée, au cours d'une nouvelle augmentation de la température, par l'agent de charbonnement réactif. Finalement et au cours d'une nouvelle augmentation de température, le retardateur de flamme de type inorganique forme une croûte qui peut être stabilisée par le biais de l'intervention d'un composé à décomposition endothermique (agent fondant susmentionné) .

La présente invention concerne, encore, une composition chimique destinée, après expansion, et séchage, à former un matériau coupe-feu présentant les caractéristiques mentionnées ci-dessus.

En fait, une telle composition chimique contient les précurseurs d'une mousse de polyuréthane. De tels précurseurs sont, par exemple et comme mentionné ci-dessus dans le cas d'une mousse de polyuréthane, constitués par, d'une part, au moins un polyol du type susmentionné et, d'autre part, au moins un isocyanate du type susmentionné.

Cette composition chimique contient, également, des moyens pour former une couche charbonnée et constitués par au moins un agent de charbonnement physique, notamment complété par au moins un agent de charbonnement réactif tel que susmentionnés.

Ladite composition chimique comporte au moins un retardateur de flamme de type inorganique tel que susmentionné.

Selon une autre caractéristique de cette composition, celle-ci contient, encore, des agents destinés à en assurer son expansion. Dans un souci de protection, de l'environnement, de tels agents sont choisis de manière à éviter les CFC ou leurs substituts et peuvent, alors, être constitués par de l'eau, du n-pentane ou autre.

Cette composition chimique peut, en outre, contenir un agent de stabilisation de la mousse, plus particulièrement constitué par un dérivé de silicone, par exemple du polysiloxane polyether ou analogue. Un tel agent de stabilisation est utilisé, d'une part, pour conférer une stabilité aux bulles de la mousse et, d'autre part, pour réaliser un réseau homogène de bulles dans le matériau.

De manière additionnelle, ladite composition chimique peut, encore, contenir un catalyseur (notamment du dibutyle dilaurate ou analogue).

Un tel catalyseur permet, avantageusement, d'accélérer la formation du matériau coupe-feu après mélange de ses différents constituants, plus particulièrement lorsqu'un tel mélange est réalisé sur site.

Il a été reporté, en annexe, des tableaux dans lesquels figurent un certain nombre de produits évoqués ci-dessus et susceptibles d'être incorporés dans la composition chimique susmentionnée, laquelle forme, après expansion et séchage, ledit matériau coupe-feu. On observera que ces produits sont donnés en pourcentage massique du produit correspondant dans la composition chimique finale.

Plus particulièrement :
- Le tableau 1 correspond à des plages de valeurs de pourcentages massiques desdits produits ;
- le tableau 2 correspond à une formulation optimale de la composition chimique conforme à l'invention ;
- les tableaux 3 et 4 correspondent à des formulations de compositions chimiques correspondant à deux autres modes de réalisation de l'invention.

Il convient d'observer qu'une telle composition chimique peut être conçue apte à être conditionnée, notamment sous vide d'air, dans un récipient, ceci avant d'en être extraite au moment de la réalisation du matériau coupe-feu.

A ce propos, on remarquera que le matériau coupe-feu est, notamment, réalisé à base d'une mousse polymère bi-composants de sorte que le récipient, destiné à contenir ladite composition chimique, comporte au moins deux compartiments distincts dont l'un est destiné à recevoir l'un de ces composants tandis que l'autre est destiné à recevoir l'autre composant.

Ainsi, un premier compartiment de ce récipient contient le ou les isocyanates tandis qu'un second compartiment contient le ou les polyols ainsi que les additifs (agent de charbonnement physique, agent de charbonnement réactif, agent de stabilisation, agent d'expansion, retardateur de flamme inorganique...).

On observera que ces deux compartiments sont isolés l'un de l'autre et que leur contenu est mélangé uniquement lors de la réalisation du matériau coupe-feu.

Aussi, lors de la réalisation de ce matériau, les composants de ladite composition chimique sont extraits hors des compartiments de ce récipient, notamment par écoulement ou (et de préférence) par injection.

A cet effet, ledit récipient comporte un système d'extrusion apte à permettre l'extraction des composants d'une telle composition chimique bi-composants.

L'invention concerne, également, l'utilisation du matériau coupe-feu décrit ci-dessus, ceci pour le calfeutrement d'une ouverture ménagée au niveau d'un bâtiment. Une telle ouverture se présente sous la forme d'une saignée, d'un orifice débouchant ou traversant et est, plus particulièrement, destinée à la réception de conduits, de gaines, de câbles (notamment électriques) ou analogues.

Pour une telle utilisation et selon un mode préféré de réalisation de l'invention, la composition (contenue dans un récipient, notamment sous vide d'air) est injectée dans une telle ouverture dans laquelle ont, au préalable, été disposés lesdits conduits, gaines, câbles ou analogues. Cette composition va, alors, s'expanser et sécher pour former ledit matériau coupe-feu selon l'invention.

Cependant et selon un autre mode de réalisation, le matériau coupe-feu selon l'invention peut être coulé dans un moule de manière à former (après expansion et séchage) un bloc, une brique ou analogue susceptible d'être découpé de manière à pouvoir être ajusté à la configuration de l'ouverture.

L'invention concerne, alors, un procédé pour le calfeutrement d'une telle ouverture par un matériau coupe-feu du type susmentionné.

Un tel procédé consiste, alors, soit à injecter dans cette ouverture une composition chimique du type susmentionné et destinée à former un matériau coupe-feu du type susmentionné (après expansion et séchage), soit à disposer dans une telle ouverture au moins un élément (brique, bloc ou analogue) constitué en un tel matériau coupe-feu.

Selon une autre caractéristique, l'invention concerne, encore, l'utilisation du matériau coupe-feu décrit ci-dessus comme matériau de construction.

Ace propos, on observera qu'un tel matériau de construction peut être employé pour la réalisation :
- d'un élément de structure (cloison, plaque, panneau sandwich ou analogue)
- d'un élément d'habillage (dalle, plaque, faux plafond ou analogue)
- d'un élément d'isolation (thermique et/ou phonique)
- d'un élément de fermeture (porte)
d'un élément de mobilier (paroi, porte ou caisson d'un meuble ou analogue)
d'une garniture (notamment de literie, de siège, par exemple de véhicule automobile).

Ainsi, un tel matériau coupe-feu peut être utilisé comme matériau de construction dans l'industrie automobile, navale, ferroviaire, aéronavale, du bâtiment, de l'ameublement, de l'équipement intérieur.

A ce propos, on observera que ce matériau coupe-feu peut, là encore, être coulé dans un moule de manière à former (après expansion, séchage et démoulage) un tel élément ou une telle garniture.

De plus, l'invention concerne, encore, l'utilisation du matériau coupe-feu décrit ci-dessus comme revêtement d'une surface. Le revêtement d'une telle surface peut, par exemple, être réalisé par projection, plus particulièrement par coating, d'un tel matériau coupe-feu sur une telle surface.

**Tableau 1**

| Produit | Pourcentage |
|---|---|
| Polyol polyether | 20-33 |
| Diisocyanate | 20-33 |
| Graphite expansible | 13-22 |
| Tri crésyl phosphate TCP | 2-11 |
| Ammonium polyphosphate APP | 0-8 |
| Borate de zinc | 4-10 |
| Mélange de poudre de verre | 0-10 |
| Di butyle dilaurate | 0.2-1.2 |
| Poly siloxane polyether | 1-8 |

**Tableau 2**

| Produit | Pourcentage |
|---|---|
| Polyol polyether | 27.2 |
| Diisocyanate | 27.2 |
| Graphite expansible | 17.5 |
| Tri crésyl phosphate TCP | 4.4 |
| Ammonium polyphosphate APP | 4.4 |
| Borate de zinc | 6.6 |
| Mélange de poudre de verre | 6.6 |
| Di butyle dilaurate | 0.9 |
| Poly siloxane polyether | 5.2 |

**Tableau 3**

| Produit | Pourcentage |
|---|---|
| Polyol polyether | 30.9 |
| Diisocyanate | 30.9 |
| Graphite expansible | 17.5 |
| Tri crésyl phosphate TCP | 8.8 |
| Borate de zinc | 8 |
| Di butyle dilaurate | 0.9 |
| Poly siloxane polyether | 3 |

**Tableau 4**

| Produit | Pourcentage |
|---|---|
| Polyol polyether | 28.75 |
| Diisocyanate | 28.75 |
| Graphite expansible | 15 |
| Tri crésyl phosphate TCP | 6 |
| Ammonium polyphosphate APP | 2.8 |
| Borate de zinc | 6.6 |
| Mélange de poudre de verre | 6.6 |
| Di butyle dilaurate | 0.5 |
| Poly siloxane polyether | 5 |

## Revendications

1. Matériau coupe-feu constitué par une mousse de polyuréthane réalisée à partir, d'une part, d'au moins un polyol et, d'autre part, d'au moins un isocyanate, ledit polyol étant un polyol polyéther ou un polyol polyester, ladite mousse de polyuréthane ne contenant aucun composé halogène et contenant des moyens retardateurs de flamme, **caractérisé par le fait que** les moyens retardateurs de flamme sont constitués par des moyens conçus pour former une couche charbonnée cohésive au niveau de la surface de la mousse, ceci pour une température correspondant à celle d'un incendie, ces moyens pour former une couche charbonnée étant, d'une part, constitués par au moins un agent de charbonnement physique destiné à former, par lui-même et en l'absence de toute interaction avec un quelconque autre constituant du matériau coupe-feu, une telle couche charbonnée, d'autre part, constitués par au moins un agent de charbonnement réactif destiné à former, en réagissant avec le polymère de la mousse, une couche charbonnée à la surface du matériau et, d'autre part encore, l'agent de charbonnement réactif, étant un tri crésyl phosphate (TCP) ou un ammonium polyphosphate (APP), complétés par au moins un retardateur dé flamme de type inorganique constitué par une charge minérale choisie parmi un mélange de poudre de verre, un silicate de calcium, du talc et par un composé à décomposition endothermique de type oxyde métallique, plus particulièrement un borate de zinc, un oxyde d'aluminium, un oxyde de magnésium, l'agent de charbonnement physique, l'agent de charbonnement réactif et le retardateur de flamme de type inorganique étant choisis en sorte d'intervenir à différents stades de l'attaque par le feu ou par la température du matériau coupe-feu, notamment de manière successive avec l'augmentation de la température.

2. Matériau coupe-feu selon la revendication 1, **caractérisé par le fait que** l'agent de charbonnement physique est constitué par au moins un composé chimique minéral adoptant une structure en feuillets et apte à s'exfolier avec la chaleur d'un incendie, ce composé chimique minéral en feuillets étant, de préférence, de type expansible à haute température.

3. Matériau coupe-feu selon la revendication 2, **caractérisé par le fait que** le composé chimique minéral en feuillets est constitué par de la vermiculite, par du mica ou analogue.

4. Matériau coupe-feu selon la revendication 3, **caractérisé par le fait que** le composé chimique minéral en feuillets est constitué par un composé à base de carbone, par exemple du graphite, plus particulièrement un graphite de type expansible.

5. Matériau coupe-feu selon l'une quelconque des revendications précédentes, **caractérisé par le fait que** le polyol présente une viscosité, à 25[deg.]C, comprise entre 200 et 1000 mPa.s, de préférence comprise entre 400 et 650 mPa.s.

6. Matériau coupe-feu selon l'une quelconque des revendications précédentes, **caractérisé par le fait que** le polyol est choisi en sorte que la mousse de polymère soit plus ou moins flexible, voire rigide, voire encore à mémoire de forme et/ou visco-élastique.

7. Matériau coupe-feu selon l'une quelconque des revendications précédentes, **caractérisé par le fait que** le polyol polyéther est réalisé à base de molécules d'éthylène glycol, de glycérine, d'aminé, de triméthylpropane, de pentaérytritol, de sucrose, de sorbitol, de saccharose ou analogue fixées sur des molécules d'oxyde de propylène et/ou d'oxyde d'éthylène.

8. Matériau coupe-feu selon l'une quelconque des revendications 1 à 6, **caractérisé par le fait que** le polyol polyester est réalisé à base d'au moins un polyacide, notamment un diacide, plus particulièrement de l'acide adipique, phtalique, maléique, succinique ou analogue.

9. Matériau coupe-feu selon la revendication 1, **caractérisé par le fait que** l'isocyanate est un diisocyanate, plus particulièrement un diphénylméthane diisocyanate (MDI).

10. Composition chimique destinée, après expansion et séchage, à former un matériau coupe-feu selon l'une quelconque des revendications précédentes et contenant les précurseurs de la mousse de polymère ainsi que les moyens retardateurs de flamme.

11. Utilisation du matériau coupe-feu selon l'une quelconque des revendications 1 à 9 pour le calfeutrement d'une ouverture pour la réception de conduits, gaines, câbles ou analogues.

12. Utilisation du matériau coupe-feu selon l'une quelconque des revendications 1 à 9 comme matériau de construction.

13. Utilisation suivant la revendication 12, **caractérisée en ce que** le matériau de construction est employé pour la réalisation d'un élément de structure, d'un élément d'habillage, d'un élément d'isolation, d'un élément de fermeture, d'un élément de mobilier, d'une garniture ou autre.

14. Utilisation du matériau coupe-feu selon l'une quelconque des revendications 12 ou 13 comme matériau de construction dans l'industrie automobile, navale, ferroviaire, aéronavale, du bâtiment, de ameublement, de équipement intérieur.

15. Utilisation du matériau coupe-feu selon l'une quelconque des revendications 1 à 9 comme revêtement d'une surface.

## Patentansprüche

1. Brandschutzmaterial, das aus einem Polyurethanschaum besteht, der aus mindestens einem Polyol einerseits und aus mindestens einem Isocyanat andererseits hergestellt ist, wobei es sich bei dem Polyol um ein Polyetherpolyol oder ein Polyesterpolyol handelt, wobei der Polyurethanschaum keinerlei Halogenverbindung enthält und Flammschutzmittel enthält, **dadurch gekennzeichnet, dass** die Flammschutzmittel aus Mitteln bestehen, die dafür ausgelegt sind, eine zusammenhängende verkohlte Schicht im Bereich der Oberfläche des Schaums zu bilden, und zwar bei einer Temperatur, die derjenigen eines Brandes entspricht, wobei diese Mittel zur Bildung einer verkohlten Schicht einerseits aus mindestens einem physikalischen Verkohlungsmittel bestehen, das dazu bestimmt ist, aus sich selbst heraus und ohne jegliche Wechselwirkung mit einem anderen Bestandteil des Brandschutzmaterials eine derartige verkohlte Schicht zu bilden, und andererseits aus mindestens einem reaktionsfähigen Verkohlungsmittel bestehen, das dazu bestimmt ist, eine verkohlte Schicht an der Oberfläche des Materials zu bilden, indem es mit dem Polymer des Schaums reagiert, wobei es sich bei dem reaktiven Verkohlungsmittel um ein Trikresylphosphat (TCP) oder ein ein Ammoniumpolyphosphat (APP) handelt, und wiederum andererseits ergänzt sind durch mindestens ein Flammschutzmittel anorganischer Art, das aus mindestens einem mineralischen Füllstoff besteht, der aus einer Mischung von Glaspulver, einem Calciumsilikat, Talk ausgewählt ist, und durch eine sich endotherm zersetzende Verbindung vom Metalloxidtyp, bei welcher es sich insbesondere um ein Zinkborat, ein Aluminiumoxid, ein Magnesiumoxid handelt, wobei das physikalische Verkohlungsmittel, das reaktionsfähige Verkohlungsmittel und das Flammschutzmittel anorganischer Art derart ausgewählt sind, dass sie in verschiedenen Stadien des Angriffs durch den Brand oder durch die Temperatur des Brandschutzmaterials aktiviert werden, insbesondere nacheinander mit zunehmender Temperatur.

2. Brandschutzmaterial nach Anspruch 1, **dadurch gekennzeichnet, dass** das physikalische Verkohlungsmittel aus mindestens einer mineralischen chemischen Verbindung besteht, die eine Schichtstruktur annimmt und dazu befähigt ist, in der Hitze eines Brandes abzublättern, wobei diese schichtförmige mineralische chemische Verbindung vorzugsweise derart beschaffen ist, dass sie sich bei hohen Temperaturen ausdehnen kann.

3. Brandschutzmaterial nach Anspruch 2, **dadurch gekennzeichnet, dass** die schichtförmige mineralische chemische Verbindung aus Vermiculit, Glimmer oder Ähnlichem besteht.

4. Brandschutzmaterial nach Anspruch 3, **dadurch gekennzeichnet, dass** die schichtförmige mineralische chemische Verbindung aus einer Verbindung auf Kohlenstoffbasis besteht, beispielsweise aus Graphit, insbesondere einem Graphit, welcher derart beschaffen ist, dass er sich ausdehnen kann.

5. Brandschutzmaterial nach einem beliebigen der vorhergehenden Ansprüche, **dadurch gekennzeichnet, dass** das Polyol eine Viskosität aufweist, die bei 25 °C im Bereich von 200 bis 1000 mPa.s, vorzugsweise im Bereich von 400 bis 650 mPa.s, liegt.

6. Brandschutzmaterial nach einem beliebigen der vorhergehenden Ansprüche, **dadurch gekennzeichnet, dass** das Polyol derart ausgewählt ist, dass der Polymerschaum mehr oder weniger biegsam oder sogar steif ist oder auch über ein Formgedächtnis verfügt und/oder viskoelastisch ist.

7. Brandschutzmaterial nach einem beliebigen der vorhergehenden Ansprüche, **dadurch gekennzeichnet, dass** das Polyetherpolyol auf Grundlage von Ethylenglykol-, Glycerin-, aminhaltigen, Trimethylpropan-, Pentaerythrit-, Sucrose-, Sorbit-, Saccharose- oder ähnlichen Molekülen hergestellt ist, welche an Propylenoxid- und/oder Ethylenoxidmoleküle angelagert werden.

8. Brandschutzmaterial nach einem beliebigen der Ansprüche 1 bis 6, **dadurch gekennzeichnet, dass** das Polyesterpolyol auf Grundlage mindestens einer Polycarbonsäure, insbesondere einer Dicarbonsäure, hergestellt ist, ganz besonders aus Adipin-, Phthal-, Malein-, Bernsteinsäure oder Ähnlichem.

9. Brandschutzmaterial nach Anspruch 1, **dadurch gekennzeichnet, dass** es sich bei dem Isocyanat um ein Diisocyanat, insbesondere um ein Diphenylmethandiisocyanat (MDI), handelt.

10. Chemische Zusammensetzung, welche dazu bestimmt ist, nachdem sie aufgeschäumt und getrocknet wurde, ein Brandschutzmaterial nach einem beliebigen der vorhergehenden Ansprüche zu bilden, und welche die Vorläuferstoffe des Polymerschaums sowie die Flammschutzmittel enthält.

11. Verwendung des Brandschutzmaterials nach einem beliebigen der Ansprüche 1 bis 9 zum Abdichten einer Öffnung zur Aufnahme von Leitungen, Schutzhüllen, Kabeln oder Ähnlichem.

12. Verwendung des Brandschutzmaterials nach einem beliebigen der Ansprüche 1 bis 9 als Baumaterial.

13. Verwendung nach Anspruch 12, **dadurch gekennzeichnet, dass** das Baumaterial eingesetzt wird, um ein tragendes Element, ein Verkleidungselement, ein Isolierungselement, ein Schließelement, ein Möbelelement, eine Füllung oder Ähnliches herzustellen.

14. Verwendung des Brandschutzmaterials nach einem beliebigen der Ansprüche 12 oder 13 als Baumaterial in den Industriezweigen Automobil, Schiffbau, Eisenbahn, Marinefliegerei, Bauwirtschaft, Möbel, Inneneinrichtung.

15. Verwendung des Brandschutzmaterials nach einem beliebigen der Ansprüche 1 bis 9 als Beschichtung einer Oberfläche.

## Claims

1. Fire-carrier material consisting of a polyurethane form produced from, on the one hand, at least one polyol and, on the other hand, from at least one isocyanate, the said polyol being a polyether polyol or a polyester polyol, the said polyurethane foam not containing any halogen compound and containing flame-retardant means, **characterized in that** the flame-retardant means are constituted by means designed for forming a cohesive charred layer at the surface of the foam, this being the case for a temperature corresponding to that of a fire, these means for forming a charred layer being, on the one hand, constituted by at least one physical charring agent intended to form, by itself and in the absence of any interaction with any other constituent of the fire-barrier material, such a charred layer, on the other hand constituted by at least one reactive charring agent intended to form, by reacting with the polymer of the foam, a charred layer at the surface of the material and, on the other hand again, reactive charring agent being a tricresyl phosphate (TCP) or an ammonium polyphosphate (APP), supplemented by at least one flame retardant of inorganic type constituted by a mineral filler chosen from a glass powder mixture, a calcium silicate, talc and via compound having endothermic decomposition of metal oxide type, more particular a zinc borate, an aluminium oxide, a magnesium oxide, the physical charring agents, the reactive charring agent and the flame retardant of inorganic type being chosen so as to intervene at different stages of the attack by the fire or by the temperature of the fire-barrier material, in particular successively with the increase in the temperature.

2. Fire-barrier material according to Claim 1, **characterized in that** the physical charring agent is constituted by at least one mineral chemical compound adopting a lamellar structure and capable of exfoliating with the heat of a fire, this lamellar mineral chemical compound preferably being of the type expandable at high temperature.

3. Fire-barrier material according to Claim 2, **characterized in that** the lamellar mineral chemical compound is constituted by vermiculite, by mica or the like.

4. Fire-barrier material according to Claim 3, **characterized in that** the lamellar mineral chemical compound is constituted by a carbon-based compound, for example graphite, more particularly a graphite of expandable type.

5. Fire-barrier material according to any one of the preceding claims, **characterized in that** the polyol exhibits a viscosity, at 25°C, of between 200 and 1000 mPa.s, preferably of between 400 and 650 mPa.s.

6. Fire-barrier material according to any one of the preceding claims, **characterized in that** the polyol is chosen so that the polymer foam is more or less flexible, indeed even rigid, indeed even further having shape and/or viscoelastic memory.

7. Fire-barrier material according to any one of the preceding claims, **characterized in that** the polyether polyol is produced based on ethylene glycol, glycerol, amino, trimethylpropane, pentaerythritol, sucrose, sorbitol, saccharose or the like molecules attached to propylene oxide and/or ethylene oxide molecules.

8. Fire-barrier material according to any one of Claims 1 to 6, **characterized in that** the polyester polyol is produced based on at least one polyacid, in particular a diacid, more particularly adipic, phthalic, maleic, succinic or the like acid.

9. Fire-barrier material according to Claim 1, **characterized in that** the isocyanate is a diisocyanate, more particularly a diphenylmethane diisocyanate (MDI).

10. Chemical composition intended, after expansion and drying, to form a fire-barrier material according to any one of the preceding claims and containing the precursors of the polymer foam and also the flame-retardant means.

11. Use of the fire-barrier material according to any one of Claims 1 to 9 for the stopping up of an ending for the reception of pipes, sheaths, cables or the like.

12. Use of the fire-barrier material according to any one of Claims 1 to 9 as construction material.

13. Use according to Claim 12, **characterized in that** the construction material is employed for the production of a structural element, of a covering element, of an insulating element, of a closing element, of a furnishing element, of a fitting or other.

14. Use of the fire-barrier material according to either one of Claims 12 and 13 as construction material in the motor vehicle, shipbuilding, railway, naval aircraft, building, household furniture or interior fittings industry.

15. Use of the fire-barrier material according to any one of Claims 1 to 9 as coating for a surface.
